# EUROPEAN PATENT APPLICATION

(11) **EP 3 503 422 A1**
(43) Date of publication of application: **26.06.2019**
(21) Application number: 17210360.8
(22) Date of filing: 22.12.2017
(51) Int. Cl.: H04B 7/026, H04B 7/0404, H04B 7/06, H04B 7/15

(54) **BASE STATION SYSTEM FOR HANDLING RADIO COMMUNICATIONS OF A USER ENTITY**

(71) Applicant: Deutsche Telekom AG, 53113 Bonn (DE)
(72) Inventor: Klatt, Axel, 50999 Köln (DE)
(74) Representative: Patentship Patentanwaltsgesellschaft mbH

(57) **Abstract**

The disclosure relates to a base station system for handling radio communications of a user entity (105) in a communication network (100), wherein the base station system comprising: a multiple-in-multiple-out (MIMO) base station (101) that is configured to handle communications in a communication cell using beamforming, the base station (101) being identified by at least one communication parameter for establishing a communication channel using beamforming between the user entity (105) and the MIMO base station (101); and a broadcast transmitter (103a) which is arranged spaced apart from the MIMO-base station (101) in the communication cell, the broadcast transmitter (103a) being further configured to broadcast control information indicating the at least one communication parameter in the communication cell.

## Description

### TECHNICAL FIELD

In general, the present invention relates to the field of wireless communications. More specifically, the present invention relates to a base station system, a user entity and a corresponding method for cellular communication with a user entity.

### BACKGROUND

To make use of available communication resources more efficiently, space diversity (also known as antenna diversity) can be used and being enhanced to the use of directional beams. For this purpose, a base station can use differently-oriented beams for communication with different user entities in the space dimension. Multiple Input Multiple Output Systems (MIMO) combine the transmission via multiple antenna elements and can create the above mentioned beans in a more selective manner. Such systems having a higher number of transmitting and receiving antenna elements are also referred to as Massive Multiple Input Multiple Output Systems (mMIMO).

However, a structural problem in the case of mMIMO communication with beamforming is transmission of control information with validity over a large space segment, especially to the user entity which is not yet connected to the mobile radio system. The control information is required for allowing the user entity to identify in the network and the cell and setting up a communication link between the user entity and the base station. In the case of LTE systems this control information is transmitted via the Physical Broadcast CHannel (PBCH) as Broadcast Control CHannel (BCCH). The information to be transmitted is organized in so-called system information blocks (SIBs) on the logical BCCH control channel, which has to possess validity over the entire coverage area of a mobile radio cell. In the case of LTE systems, the middle 1.4 MHz of a frequency band is populated with the BCCH control information.

In order to transmit the control information using beamforming, several beams or beam movement can be deployed. Thereby, available space-diversity resources must be deployed for transmitting the control information in different directions, which contradicts the space-diversity notion per se. Another problem is the shading in the urban environment, which can be caused for example by buildings, trees or other obstacles between the user entity and base station therein. This problem can only be partially compensated by electromagnetic diffraction effects, in particular by increasing beam separation or resolution.

In light of the above, there is a need for an improved base station system, allowing an improvement on cellular radio communications with a user entity.

### SUMMARY OF THE INVENTION

It is an object of the disclosure to provide an improved base station system, allowing an improvement on cellular radio communications with a user entity.

The foregoing and other objects are achieved by the subject matter of the independent claims. Further implementation forms are apparent from the dependent claims, the description and the figures.

Generally, the disclosure relates to a multiple-in-multiple-out (MIMO) base station and a broadcast transmitter, a user entity as well as a corresponding method for handling radio communications of a user entity in a communication network and providing the user entity with reliable and efficient radio access to a communication network.

More specifically, embodiments of the present disclosure can utilize urban-distributed transmitters, which are arranged spaced apart from and assigned to an actual base station of a cell. In other words, these urban-distributed transmitters are remote PBCH (Physical Broadcast CHannel) transmitters that can provide the system information of the associated cell in a decentralized manner to the user entities, such as the user equipments or mobile phones or car communication systems, and these distributed transmitters can be thus configured appropriately, for instance, by the base station providing the system information to be transmitted in real time.

Thus, according to a first aspect the disclosure relates to a base station system for handling radio communications of a user entity in a communication network, wherein the base station system comprises: a multiple-in-multiple-out (MIMO) base station that is configured to handle communications in a communication cell using beamforming, the base station being identified by at least one communication parameter for establishing a communication channel using beamforming between the user entity and the MIMO base station. The base station system further comprises a broadcast transmitter which is arranged spaced apart from the MIMO base station in the communication cell, wherein the broadcast transmitter is configured to broadcast control information indicating the at least one communication parameter in the communication cell.

Thus, an improved base station system is provided, allowing an improvement on cellular radio communications with a user entity.

In a further possible implementation form of the first aspect, the base station system comprises a plurality of broadcast transmitters which are arranged spaced apart from the MIMO base station and from each other in the communication cell, each broadcast transmitter being further configured to broadcast the control information indicating the at least one communication parameter in the communication cell.

Thereby, the control information can efficiently be communicated across the entire communication cell with reduced transmission power per beamforming transmitter, as compared to the transmission power which would be required by the MIMO base station to transmit the control information.

In a further possible implementation form of the first aspect, the respective transmitter is arranged in an area of the communication cell which is shaded with respect for receiving transmission beams originating from the MIMO base station.

Thereby, the control information can efficiently be communicated across the area of the communication cell, in particular in shaded urban regions which are difficult to reach using beamforming.

In a further possible implementation form of the first aspect, the respective broadcast transmitter comprises at least a broadcasting antenna for broadcasting the control simultaneously in a multiplicity of directions. The broadcasting antenna can be an omnidirectional antenna or can comprise several antenna segments being directed towards different directions.

In a further possible implementation form of the first aspect, the respective broadcast transmitter is configured to broadcast the control information continuously and/or independently from the MIMO base station.

Thereby, the control information can be broadcasted even in case of a failure of the MIMO base station. In addition, the control information can be provided anytime and anywhere in the communication cell, which may accelerate the attach procedure for connecting to the base station by the user entity. The broadcast transmitters can transmit the control information also independently from each other.

In a further possible implementation form of the first aspect, the MIMO base station is configured to handle communications in the communication cell using beamforming according the fifth generation (5G) communication technology or higher, and/or wherein the respective broadcast transmitter is configured to broadcast the control information according to one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

In a further possible implementation form of the first aspect, the communication channel between the user entity and the MIMO base station is an uplink communication channel, in particular an random access channel (RACH). The control information can therefore also include RACH parameters for establishing the RACH.

In a further possible implementation form of the first aspect, the MIMO base station comprises a MIMO antenna, in particular a massive MIMO antenna according to the 5G technology, being configured to receive a communication beam from the user entity and to transmit the communication beam towards the user entity.

In a further possible implementation form of the first aspect, the MIMO antenna comprises an array of antenna elements, in particular at least 16 antenna elements, for generating a code beam, and wherein the base station is configured to generate a feed signal to the MIMO antenna for generating a communication beam upon the basis of a predetermined MIMO codebook, in particular a MIMO codebook according to the 5G technology. The codebook indicates for example phase shifts for each antenna element in order to generate a spatially directed transmission beam.

In a further possible implementation form of the first aspect, the respective broadcast transmitter comprises a memory with pre-stored control information relating to the MIMO base station.

Thereby, a control overhead can be reduced.

In a further possible implementation form of the first aspect, the MIMO base station is configured to generate a dedicated communication beam directed towards the respective transmitter for directly communicating with the respective broadcast transmitter, in particular for updating control information stored in the respective broadcast transmitter, or for activating or deactivating the respective broadcast transmitter, for controlling operation of the respective transmitter, for adjusting a broadcast transmission power of the respective broadcast transmitter or for updating functions or operation system of the respective transmitter.

The dedicated communication beam forms a spatially aligned communication channel towards the respective broadcasting transmitter.

In a further possible implementation form of the first aspect, each broadcast transmitter comprises a beam reception antenna for receiving the communication beam from the base station, and a broadcasting antenna for broadcasting the control information.

Each transmitter can comprise circuitry which detects data carried by the received beam, and modulates the received data according to a modulation scheme such as OFDM, SC-FDM or QAM, used for broadcasting in one of the aforementioned technologies.

In a further possible implementation form of the first aspect, the respective broadcast transmitter comprises a transmitter identification that identifies the respective broadcast transmitter in the communication cell. The transmitter identification can be a transmitter number or any other network ID identifying the transmitters in the communication cell.

In a further possible implementation form of the first aspect, the respective broadcast transmitter is configured to determine its location in the communication cell, in particular upon reception of a GPS signal, and wherein each transmitter is configured to transmit, in particular broadcast, location information, in particular together with the transmitter identification, towards the MIMO base station.

In a further possible implementation form of the first aspect, the control information indicates at least one or a combination of any of the following communication parameters: Broadcast Channel Master Information Block (MIB), System Information Block (SIB), cell identification, Public Land Mobile Network (PLMN) configuration, Random Access Channel (RACH) configuration, base station identification, location area information, indication of communication channels, indication of communication frequencies, indication of neighbor cell information, indication of communication technology associated with the MIMO base station, in particular 5G.

According to a second aspect, the disclosure relates to a user entity, in particular a smartphone, capable of communicating with the base station system according to the first aspect, the user entity being configured to receive a broadcast signal from the broadcast transmitter, the broadcast signal comprising the control information indicating the at least one communication parameter in the communication cell, and establish a communication channel, in particular a random access control channel, towards the MIMO base station using beamforming and the at least one communication parameter in the communication cell.

The user entity can comprise a beamforming antenna, in particular a MIMO antenna arrangement, for transmitting or receiving a communication beam towards the MIMO base station. The beamforming antenna can additionally be configured to receive a broadcast signal. Optionally, the user entity can comprise a broadcast antenna capable of receiving the broadcast signal.

The control information can be formed as described herein.

In particular, in a further possible implementation form of the second aspect, the user entity is capable of reading information, in particular information of one or a combination of any of the following communication parameters: Broadcast Channel Master Information Block (MIB), System Information Block (SIB), cell identification, Public Land Mobile Network (PLMN) configuration, Random Access Channel (RACH) configuration, base station identification, location area information, indication of communication channels, indication of communication frequencies, indication of neighbor cell information, indication of communication technology associated with the MIMO base station, in particular 5G from the broadcast transmitter in the communication cell.

In a further possible implementation form of the second aspect, the user entity is configured to identify at least one broadcast transmitter being associated with the MIMO base station. The broadcast transmitter can broadcast a transmitter identification which, upon reception, allows the user entity to identify the MIMO base station.

According to a third aspect, the disclosure relates to a communication method for providing a user entity with radio access to a communication network comprising a base station system, wherein the base station system comprises a multiple-in-multiple-out (MIMO) base station configured to handle communications in a communication cell using beamforming, the MIMO base station being identified by at least one communication parameter for establishing a communication channel using beamforming between the user entity and the MIMO base station, and wherein the base station system further comprises a broadcast transmitter arranged spaced apart from the MIMO base station in the communication cell, the broadcast transmitter being further configured to broadcast control information indicating the at least one communication parameter in the communication cell.

The communication method comprises the following steps: broadcasting the control information by the broadcast transmitter in the communication cell; receiving the broadcasted control information and extracting the communication parameter by the user entity; and establishing a communication channel, in particular an uplink communication channel such as random access channel, between the user entity and the MIMO base station by the user entity using beamforming and the extracted communication parameter.

The communication method can be implemented using the system according to the first aspect.

Furthermore, the user entity of the second aspect can be configured to communicate with the base station system using the communication method of the third aspect.

Thus, an improved communication method is provided, allowing an improvement on cellular radio communications with a user entity.

According to a fourth aspect, the invention relates to a computer program comprising a computer readable program code which, when executed on theMIMO base station and/or the broadcast transmitter of the base station system according to the first aspect, and/or on the user entity according to the second aspect, performs the method according to the third aspect.

According to a fifth aspect, the invention relates to a omputer program product comprising the computer program according to the fourth aspect.

### BRIEF DESCRIPTION OF THE DRAWINGS

Further embodiments of the invention will be described with respect to the following figures, wherein:
Figure 1 shows a schematic diagram of a communication network comprising a base station, a plurality of transmitters and a user entity according to an embodiment;
Figure 2 shows a schematic diagram of a communication network comprising a base station, a plurality of transmitters and a user entity according to an embodiment; and
Figure 3 shows a diagram illustrating a communication method according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims, embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

The present disclosure is based on the recognition that the problems in the state-of-the-art systems can be solved by urban-distributed transmitters, which are arranged spaced apart from and assigned to an actual base station of a cell. More specifically, these urban-distributed transmitters are remote PBCH (Physical Broadcast CHannel) transmitters that can provide the system information of the associated cell in a decentralized manner to the user entities, such as user equipments or mobile phones or car communication systems, and these distributed transmitters can be thus configured appropriately for this purpose, for instance, by the base station providing the system information to be transmitted in real time.

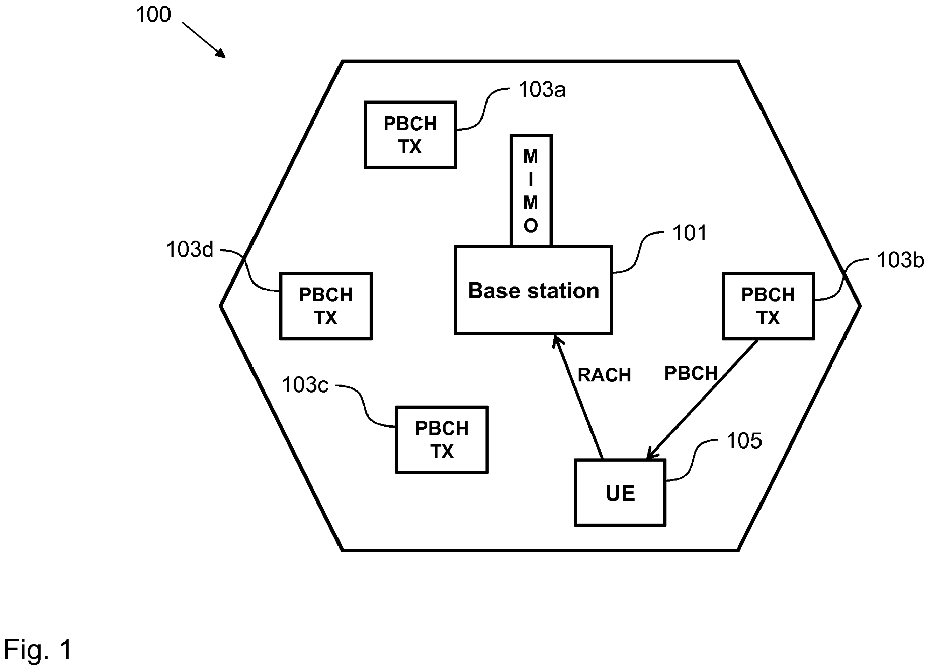

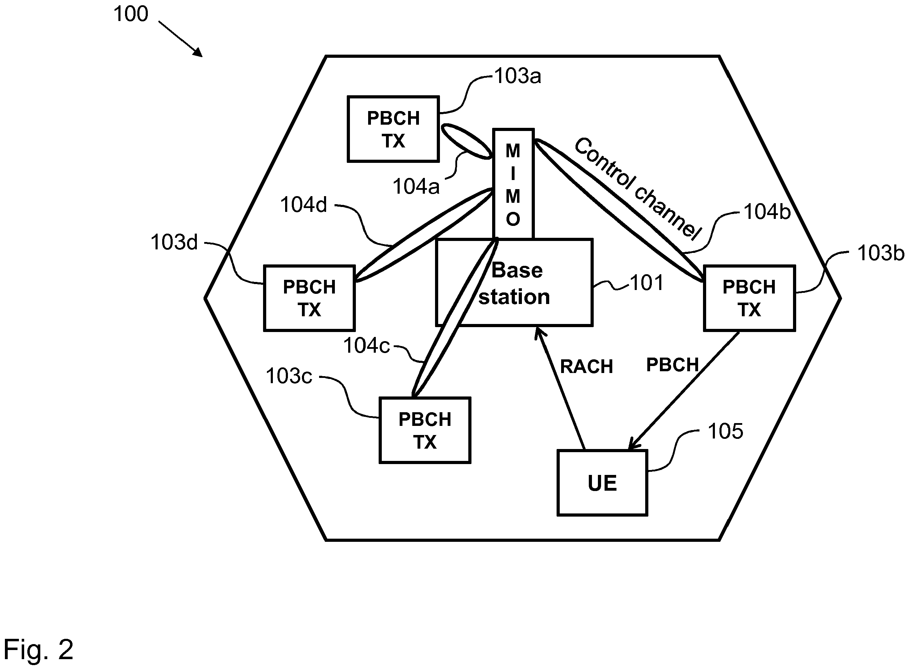

Furthermore, independently of the base station, these distributed transmitters can transmit the control information of the broadcast control channel (BCCH), such as Master Information Blocks (MIBs) or System Information Block (SIBs) in LTE systems with a PLMN (public land mobile network) identity, a cell identity, or RACH (random access channel) configuration data for cell access by broadcast with regard to the respective base station. The system architecture for such a communication system will be further explained under reference to figures 1 and 2 in the following embodiments.

Figure 1 shows a schematic diagram of a communication network 100 according to an embodiment, wherein the communication network 100 comprises a multiple-in-multiple-out (MIMO) base station 101 and a plurality of broadcast transmitters 103a-d in a communication cell, as well as a user communication device 105 according to an embodiment, wherein the plurality of broadcast transmitters 103a-d are arranged spaced apart from the MIMO-base station 101 and also apart from each other in the communication cell.

The MIMO base station 101 is configured to handle communications in the communication cell using beamforming according to the fifth generation (5G) or even more advanced communication technology, wherein the base station 101 can be identified by at least one communication parameter for establishing a communication channel between the user entity 105 and the base station itself 101 via beamforming. The communication channel can be an uplink communication channel, in particular a random access channel (RACH).

Each of the plurality of broadcast transmitters 103a-d comprises a beam reception antenna for receiving the communication beam from the base station 101 as well as a broadcasting antenna for broadcasting the control information simultaneously in a multiplicity of directions and continuously and/or independently from the MIMO base station 101. The control information indicates the at least one communication parameter in the communication cell according to one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

According to a further embodiment, each respective broadcast transmitter 103a-d can comprise a memory with pre-stored control information relating to the MIMO base station 101. The MIMO base station 101 is configured to generate a dedicated communication beam directed towards the respective transmitter 103a-d for directly communicating with the respective broadcast transmitter 103a-d, in particular for updating control information stored in the respective broadcast transmitter 103a-d, or for activating or deactivating the respective broadcast transmitter 103a-d, for controlling operation of the respective transmitter 103a-d, for adjusting a broadcast transmission power of the respective broadcast transmitter 103a-dor for updating functions or operation system of the respective transmitter 103a-d.

In an embodiment, the control information indicates at least one or a combination of any of the following communication parameters: broadcast channel master information block (MIB), system information block (SIB), cell identification, public land mobile network (PLMN) configuration, RACH configuration, base station identification, location area information, indication of communication channels, indication of communication frequencies, indication of neighbor cell information, indication of communication technology associated with the MIMO base station, in particular 5G.

Furthermore, each broadcast transmitter 103a-d comprises a transmitter identification that identifies the respective broadcast transmitter 103a-d in the communication cell and each broadcast transmitter 103a-d is configured to determine its location in the communication cell, in particular upon reception of a GPS signal. Each transmitter 103a-d is then configured to transmit, in particular broadcast, its transmitter identification towards the MIMO base station 101.

For communicating with the user entity 105 such as a user equipment (UE) or a mobile phone or a car communication system, the MIMO base station 101 comprises a MIMO antenna, in particular a massive MIMO antenna according to the 5G technology, which is configured to either receive a communication beam from the user entity 105 or to transmit the communication beam towards the user entity 105, wherein the MIMO antenna can comprise an array of antenna elements, in particular at least 16 antenna elements, for generating a code beam. The base station 101 is configured to generate a feed signal to the MIMO antenna for generating a communication beam upon the basis of a predetermined MIMO codebook, in particular a MIMO codebook according to the 5G technology.

The user entity 105, upon receipt of the information of the physical broadcast channel (PBCH) from any transmitters 103a-d associated with the base station 101, may perform cell selection (the base station) and access the random access channel (RACH) of the base station 101 on the basis of the provided configuration data to establish a connection. The connection can be established, for example, using beamforming, since the geographic location of the accessing user entity (UE) 105 is now known in the base station 101 and an UE-specific beam can be formed for targeted communication with the user entity 105.

The transmitters can transmit the system control information, for example, over the LTE broadcast channel. However, the principle can also apply equivalently to any other mobile technology such as 3GPP 5G New Radio. Limitation to the exemplary system information blocks is not known yet; instead, all control information of a mobile radio system can essentially be transmitted by means of remote transmitter nodes in the manner as described above.

It is worth noting that the transmitters 103a-d can operate independently of the base station 101. Thus, the transmitters can transmit, for example, pre-stored control information, which in turn can be changed at regular intervals by the assigned base station.

According to an embodiment, the transmitters 103a-d can be controlled by the base station 101 by means of a wired connection using copper, coax or fiber.

According to a further embodiment, the transmitters 103a-d can be controlled by the base station 101 by means of radio beams 104a-d. For example, the control channel can be performed directly from the base station 101 using beams 104a-d oriented towards the transmitters 103a-d, as illustrated in figure 2.

Similar to figure 1, the communication network 100 as shown in figure 2 comprises a multiple-in-multiple-out (MIMO) base station 101 and a plurality of broadcast transmitters 103a-d in a communication cell according to an embodiment, as well as a user communication device 105 according to an embodiment, wherein the plurality of broadcast transmitters 103a-d are arranged spaced apart from the MIMO-base station 101 and also apart from each other in the communication cell and wherein the transmitters 103a-d are controlled by the base station 101 by means of the control channels 104a-d.

By means of the directional control channels 104a-d, the transmitters 103a-d can perform the following tasks or functions by the base station 101: being activated or deactivated; being maintained (maintenance); receiving updates of the control information to be sent; being provided with an transmitter identity for unambiguous identification or initial commissioning; setting up the transmission power; being configured to perform system measurements and to transmitting them to the base station 101.

Furthermore, each transmitter 103a-d can transmit other control information, so that different RACH parameters such as transmission powers can be broadcast, depending on the geographical location of the respective transmitter 103a-d. Thus, the distribution of transmission-power densities can be adapted to local conditions. For this purpose, the transmitters 103a-d can be equipped with GPS receivers and transmit the respective position to the base station 101 by using the broadcast signals.

In a further embodiment, the transmitters 103a-d can communicate with each other via broadcast signals. In this way, the transmitters 103a-d can adjust or equalize their transmit power or any other parameters, or even authenticate each other. In this regard, a first transmitter 103a can measure the received power of a broadcast signal from a second transmitter 103b. If the received power exceeds a threshold value, the first transmitter 103a can send out a signal for power reduction to the second transmitter 103b, for example, by a predetermined value (e.g., 1 dB). This process can be carried out iteratively; thereby the transmission power of the transmitter 103a-d can be controlled accordingly.

According to the embodiments of the present disclosure, it is essential that the transmitters 103a-d are distributed and spaced apart from the base station 101. Furthermore, the transmitters 103a-d are assigned to at least one base station 101 logically.

To avoid the shadowing effects caused by buildings or other obstacles, each respective transmitter 103a-d can be further arranged to locate in an area of the communication cell that is shaded with respect for receiving transmission beams originating from the MIMO base station 101.

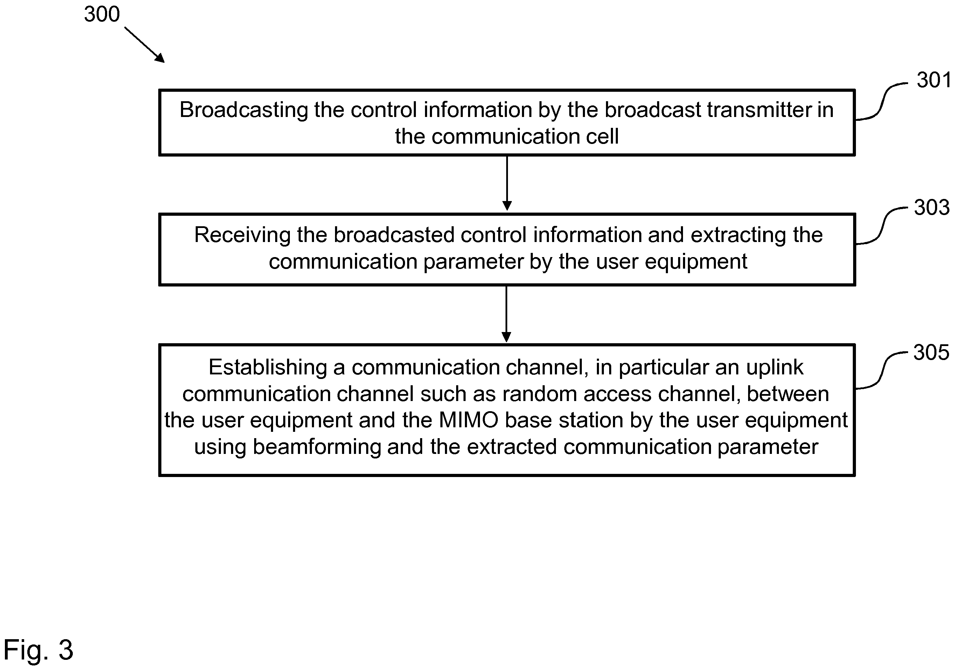

Figure 3 shows a diagram illustrating a corresponding communication method 300 for providing a user entity 105 with radio access to a communication network comprising a base station system, wherein the base station system comprises: a multiple-in-multiple-out (MIMO) base station 101 configured to handle communications in a communication cell using beamforming und identified by at least one communication parameter for establishing a communication channel using beamforming between the user entity 105 and the MIMO base station 101; and a broadcast transmitter 103a-d arranged spaced apart from the MIMO-base station 101 in the communication cell und further configured to broadcast control information indicating the at least one communication parameter in the communication cell.

The communication method 300 comprises the following steps: a first step 301 of broadcasting the control information by the broadcast transmitter 103a-d in the communication cell; a second step 303 of receiving the broadcasted control information and extracting the communication parameter by the user entity 105; and a third step 305 of establishing a communication channel, in particular an uplink communication channel such as random access channel, between the user entity 105 and the MIMO base station 101 by the user entity 105 using beamforming and the extracted communication parameter.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless of whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A base station system for handling radio communications of a user entity (105) in a communication network (100), the base station system comprising:
a multiple-in-multiple-out (MIMO) base station (101) that is configured to handle communications in a communication cell using beamforming, the MIMO base station (101) being identified by at least one communication parameter for establishing a communication channel using beamforming between the user entity (105) and the MIMO base station (101); and
a broadcast transmitter (103a) which is arranged spaced apart from the MIMO-base station (101) in the communication cell, the broadcast transmitter (103a) being further configured to broadcast control information indicating the at least one communication parameter in the communication cell.

2. The base station system according to claim 1, comprising a plurality of broadcast transmitters (103a-d) which are arranged spaced apart from the MIMO-base station (101) and from each other in the communication cell, each broadcast transmitter (103a-d) being further configured to broadcast the control information indicating the at least one communication parameter in the communication cell.

3. The base station system according to anyone of the preceding claims, wherein the respective broadcast transmitter (103a-d) is configured to broadcast the control information continuously and/or independently from the MIMO base station (101).

4. The base station system according to anyone of the preceding claims, wherein the MIMO base station (101) is configured to handle communications in the communication cell using beamforming according the fifth generation (5G) communication technology or higher, and/or wherein the respective broadcast transmitter (103a-d) is configured to broadcast the control information according to one of the following communication technologies: GSM, LTE, LTE-A, UMTS, HSPA, 3GPP, in particular 3GPP NR, New Radio, 5G or IEEE radio systems such as Wireless LAN, WiGig, or any of the evolutions and successors of these technologies.

5. The base station system according to anyone of the preceding claims, wherein the communication channel between the user entity (105) and the MIMO base station (101) is an uplink communication channel, in particular an random access channel (RACH).

6. The base station system according to anyone of the preceding claims, wherein the MIMO base station (101) comprises a MIMO antenna, in particular a massive MIMO antenna according to the 5G technology, being configured to receive a communication beam from the user entity and to transmit the communication beam towards the user entity.

7. The base station system according to anyone of the preceding claims, wherein the MIMO base station (101) is configured to generate a dedicated communication beam (104a-d) directed towards the respective transmitter (103a-d) for directly communicating with the respective broadcast transmitter (103a-d), in particular for updating control information stored in the respective broadcast transmitter (103a-d), or for activating or deactivating the respective broadcast transmitter (103a-d), for controlling operation of the respective transmitter (103a-d), for adjusting a broadcast transmission power of the respective broadcast transmitter (103a-d) or for updating functions or operation system of the respective transmitter (103a-d).

8. The base station system according to anyone of the preceding claims, wherein the respective broadcast transmitter (103a-d) comprises a transmitter identification that identifies the respective broadcast transmitter (103a-d) in the communication cell.

9. The base station system according to anyone of the preceding claims, wherein the respective broadcast transmitter (103a-d) is configured to determine its location in the communication cell, in particular upon reception of a GPS signal, and wherein each transmitter (103a-d) is configured to transmit, in particular broadcast, location information towards the MIMO base station (101).

10. The base station system according to anyone of the preceding claims, wherein the control information indicates at least one or a combination of any of the following communication parameters: Broadcast Channel Master Information Block (MIB), System Information Block (SIB), cell identification, Public Land Mobile Network (PLMN) configuration, Random Access Channel (RACH) configuration, base station identification, location area information, indication of communication channels, indication of communication frequencies, indication of neighbor cell information, indication of communication technology associated with the MIMO base station (101), in particular 5G.

11. A user entity (105) that is configured to communicate with the base station system according to anyone of the preceding claims 1 to 10, the user entity being configured to
receive a broadcast signal from the broadcast transmitter (103a), the broadcast signal comprising the control information indicating the at least one communication parameter in the communication cell; and
establish a communication channel, in particular a random access control channel, towards the MIMO base station (101) using beamforming and the at least one communication parameter in the communication cell.

12. The user entity (105) of claim 11, that is configured to identify at least one broadcast transmitter (103a) being associated with the MIMO base station (101).

13. A communication method (300) for providing a user entity (105) radio access to a communication network comprising a base station system, the base station system comprising: a multiple-in-multiple-out (MIMO) base station (101) configured to handle communications in a communication cell using beamforming, the MIMO base station (101) being identified by at least one communication parameter for establishing a communication channel using beamforming between the user entity (105) and the MIMO base station (101); and a broadcast transmitter (103a) arranged spaced apart from the MIMO base station (101) in the communication cell, the broadcast transmitter (103a) being further configured to broadcast control information indicating the at least one communication parameter in the communication cell, the communication method (300) comprising:
broadcasting (301) the control information by the broadcast transmitter (103a) in the communication cell;
receiving (303) the broadcasted control information and extracting the communication parameter by the user entity (105); and
establishing (305) a communication channel, in particular an uplink communication channel such as random access channel, between the user entity (105) and the MIMO base station (101) by the user entity (105) using beamforming and the extracted communication parameter.

14. A computer program comprising a computer readable program code which, when executed on theMIMO base station (101) and/or the broadcast transmitter (103a) of the base station system according to anyone of the preceding claims 1 to 10, and/or on the user entity (105) according to anyone of the claims 11 to 12, performs the method (300) according to claim 13.

15. A computer program product comprising the computer program according to claim 14.
